# EUROPÄISCHE PATENTSCHRIFT

(11) **EP 3 735 735 B1**
(45) Veröffentlichungstag und Bekanntmachung des Hinweises auf die Patenterteilung: **30.07.2025**
(21) Anmeldenummer: 18839593.3
(22) Anmeldetag: 28.11.2018
(51) Int. Cl.: H02K 1/276, H02K 1/278, H02K 15/03

(54) **VERFAHREN ZUR BEFESTIGUNG MINDESTENS EINES MAGNETEN AN EINEM BLECHPAKET EINES ROTORS FÜR EINEN ELEKTROMOTOR, EIN ROTOR UND EIN ELEKTROMOTOR MIT DEM ROTOR**
METHOD FOR FASTENING AT LEAST ONE MAGNET TO A LAMINATED CORE OF A ROTOR FOR AN ELECTRIC MOTOR, A ROTOR, AND AN ELECTRIC MOTOR HAVING THE ROTOR
PROCÉDÉ DE FIXATION D'AU MOINS UN AIMANT À UN EMPILEMENT DE TÔLES D'UN ROTOR POUR UN MOTEUR ÉLECTRIQUE, ROTOR ET MOTEUR ÉLECTRIQUE POURVU DU ROTOR

(30) Priorität: 05.01.2018 DE 102018100167; 27.11.2018 DE 102018129877
(43) Veröffentlichungstag der Anmeldung: 11.11.2020
(73) Patentinhaber: Schaeffler Technologies AG & Co. KG, 91074 Herzogenaurach (DE)
(72) Erfinder: NIESE, Stephan, 90571 Schwaig b Nürnberg (DE)
(86) Internationale Anmeldenummer: PCT/DE2018/100963
(87) Internationale Veröffentlichungsnummer: WO 2019/134723

(56) Entgegenhaltungen:
- WO-A2-2013/013128
- DE-A1- 10 349 442
- JP-A- 2007 060 836
- JP-A- 2007 174 872
- JP-A- 2008 219 992
- JP-A- 2013 009 499
- JP-A- 2017 163 734
- US-A1- 2006 273 679

## Beschreibung

Die Erfindung betrifft ein Verfahren zur Befestigung mehrerer Magneten an einem Blechpaket eines Rotors für einen Elektromotor, wobei jeder der mehreren Magnete mit einem Klebeband umwickelt wird, sodass mehrere verklebbare Magnete gebildet werden, wobei das Klebeband ein Trägerband und mindestens einen Klebstoff umfasst. Die Erfindung betrifft weiterhin einen Rotor und einen Elektromotor mit dem Rotor.

Verfahren zur Befestigung von Magneten an Blechpaketen zur Bildung eines Rotors sind aus dem Stand der Technik bereits bekannt. Neben der Möglichkeit, Magnete in die entsprechenden Kavitäten einzupressen oder darin zu verstemmen, ist es auch bekannt, die Magnete an dem Rotor oder in den Kavitäten des Rotors mit flüssigem Klebstoff zu verkleben.

Beispielsweise beschreibt die Druckschrift DE 10 2011 117 946 A1 ein Verfahren zum Applizieren eines Magnetpols auf einen Rotor mit den folgenden Schritten: Ankleben eines Temporärklebers z.B. in Form eines doppelseitigen Klebebands an einer ebenen Fläche eines Applizierwerkzeugs, Bestücken des Applizierwerkzeugs an dem Temporärkleber mit mindestens einem Magneten und Applizieren des mindestens einen Magneten mittels einer Andruckeinheit an den mit einem Applizierkleber versehenen Rotor.

Die Druckschrift DE 10 2006 049 866 A1 offenbart eine elektrische Maschine mit einem Stator mit einem Wicklungssystem, das in Nuten angeordnet ist, und mit einem Rotor, an dessen Oberfläche Permanentmagnete angeordnet sind, wobei die Permanentmagnete durch mindestens zwei unterschiedliche Befestigungsmittel an der Oberfläche des Rotors fixiert und positioniert sind. Bei den mindestens zwei Befestigungsmitteln handelt es sich um ein doppelseitiges Klebeband und um einen Flüssigklebstoff.

Die US 3 727 302 A wie auch die JP 9 163 649 A2 beschreiben eine Befestigung von Magneten mittels eines doppelseitigen Klebebandes. Hierbei ist problematisch, dass die Handhabung und Einbringung eines mit einem beidseitigen Klebeband verbundenen Magneten in die Öffnungen eines Rotors aufgrund der dem Rotor zugewandten klebrigen Oberfläche des Klebebandes schwierig ist.

Die DE 103 49 442 A1 offenbart einem Rotor mit permanentmagnetischer Erregung durch mehrere Dauermagnete, die mit einer elektrisch isolierenden und korrosionsschützenden Schicht überzogen sind und in Ausnehmungen eines Blechpaketes eingesetzt und befestigt sind.

WO2013013128A2 offenbart einen Rotor, bei dem ein Magnet mit einem Klebeband befestigt ist.

Der Erfindung liegt die Aufgabe zugrunde, ein einfaches und kostengünstiges Verfahren bereitzustellen, mit dem mehrere Magnete an einem Blechpaket zur Bildung eines Rotors für einen Elektromotor befestigt werden kann. Diese Aufgabe wird durch ein Verfahren zur Befestigung mehrerer Magnete an einem Blechpaket zur Bildung eines Rotors für einen Elektromotor mit den Merkmalen des Anspruchs 1, durch einen Rotor mit den mehreren Magneten mit den Merkmalen des Anspruchs 7 und durch einen Elektromotor mit dem Rotor mit den Merkmalen des Anspruchs 8 gelöst.

Bevorzugte oder vorteilhafte Ausführungsformen der Erfindung ergeben sich aus den Unteransprüchen, der nachfolgenden Beschreibung und/oder den beigefügten Figuren. Es wird ein Verfahren zur Befestigung mehrerer Magnete, insbesondere mehrerer Dauermagnete, an einem Blechpaket eines Rotors für einen Elektromotor vorgeschlagen. Der Elektromotor ist zum Antrieb eines Fahrzeugs, insbesondere für ein Elektromobil zur Personenbeförderung, ausgebildet und hierfür in dem Fahrzeug integrierbar. Bei dem Rotor handelt es sich insbesondere um ein rotierendes, magnetisch wirkendes Element des Elektromotors. Üblicherweise umfasst der Elektromotor auch einen Stator, ein feststehendes Element, das mit Kupferdrahtspulen bewickelt ist. Bevorzugt ist der Rotor, wie z.B. auch der Stator, aus zahlreichen Elektroblechteilen gebildet, die gestanzt und zu Blechpaketen gestapelt werden. Im Speziellen ist jedes der Blechteile gegenüber dem anderen Blechteil mit einer Isolierschicht versehen. Optional bezieht der Elektromotor elektrische Energie aus einer Traktionsbatterie des Fahrzeugs. Wenn Strom durch die Kupferdrahtspulen des Stators fließt, entstehen dadurch Magnetfelder, denen der Rotor mit seinen Dauermagneten folgt, sodass der Rotor rotiert. Bevorzugt werden Rotationen des Rotors über ein Getriebe auf eine Antriebsachse zum Antrieb von Rädern des Fahrzeugs übertragen.

Erfindungsgemäß werden die mehreren Magnete mit einem Klebeband umwickelt. Vorzugsweise sind die mehreren Magnete vollständig mit dem Klebeband umwickelt. Dadurch werden mehrere verklebbare Magnete gebildet. Insbesondere können die mehreren verklebbaren Magnete in einer entsprechenden Kavität des Rotors durch eine Klebeverbindung befestigt werden.

Das Klebeband umfasst ein Trägerband und mindestens einen Klebstoff, wobei erfindungsgemäß das Trägerband durch ein offen-poröses Vliesmaterial gebildet ist, das bei Raumtemperatur lediglich einseitig mit dem mindestens einen Klebstoff beschichtet ist, wobei der mindestens eine Klebstoff bei einer Temperaturerhöhung um mindestens 20°C gegenüber der Raumtemperatur das offen-poröse Vliesmaterial durchdringt und sich mit dem Blechpaket des Rotors verbindet.

Die bei Raumtemperatur klebrige Seite des Klebebandes wird dabei dem jeweiligen Magneten zugewandt eingesetzt. Dies ist besonders vorteilhaft, da das Vliesmaterial auf der, dem Rotor zugewandten Seite nicht klebrig ist und somit eine exakte Positionierung des verklebbaren Magneten in der Kavität des Rotors erlaubt. Das Einbringen des verklebbaren Magneten in eine Kavität des Rotors und die Positionierung innerhalb der Kavität ist somit deutlich vereinfacht. Das Fixieren in der Kavität erfolgt durch einfaches Erwärmen der Anordnung aus Blechpaket und mehreren verklebbaren Magneten, wobei eine Viskosität des mindestens einen Klebstoffs sinkt und dieser in diesem Zustand in der Lage ist, das Vliesmaterial zu durchdringen und in Richtung Blechpaket zu gelangen, wo eine Verklebung mit diesem erfolgt. Beim Abkühlen der Anordnung härtet der mindestens eine Klebstoff aus und es bildet sich eine dauerhafte und feste Verbindung zwischen Magnet und Blechpaket beziehungsweise Magnet und Rotor aus.

Gemäß dem bekannten Stand der Technik wird zusätzlich zu einem doppelseitigen Klebeband mit zwei klebrigen und daher schwer handhabbaren Seiten ein weiterer Klebstoff, z.B. Flüssigklebstoff, verwendet, um Magnete an einem Rotor zu befestigen. Dies ist aufgrund einer aufwendigen Dosiertechnik, Prozessüberwachung und Prozessentwicklung zeit- und kostenintensiv. Insbesondere muss sichergestellt sein, dass der weitere Klebstoff in alle Bereiche der Kavität eindringt und die Seitenwände benetzt, um die Magnete sicher zu isolieren und zu fixieren.

Durch das erfindungsgemäße Verfahren und den erfindungsgemäßen Rotor kann in vorteilhafter Weise auf einer Seite des Klebebandes auf Klebstoff verzichtet werden und der Einsatz von Flüssigklebstoff vermieden werden, was weiterhin zu einer Kosteneinsparung führt.

Das Vliesmaterial ist bevorzugt ein textiles Material, das insbesondere eine Dicke im Bereich von 50 bis 150 µm aufweist.

Erfindungsgemäß weist das Blechpaket mindestens eine Kavität für die mehreren verklebbaren Magnete auf. Ein erfindungsgemäßer Verfahrensschritt sieht vor, dass die mehreren verklebbaren Magnete in die mindestens eine Kavität eingesetzt und/oder darin gefügt werden. Der Verfahrensschritt sieht weiter vor, dass mehrere verklebbare Magnete aneinandergereiht und/oder aufeinander gestapelt werden. Weiter ist zwischen jedem der Magnete und an den Außenseiten der Magnete zumindest eine Lage des Klebebands angeordnet. Insbesondere wird dadurch ein verklebbares Magnetpaket aus mindestens zwei, drei, vier oder mehr verklebbaren Magneten gebildet. Im Speziellen wird das verklebbare Magnetpaket in die entsprechende Kavität des Rotors eingesetzt. Somit bietet das erfindungsgemäße Verfahren den Vorteil, dass nicht nur ein Magnet pro Kavität gefügt werden kann, sondern mehrere Magnete zugleich, insbesondere in der Ausbildung als das Magnetpaket. Besonders vorteilhaft ist, dass die Bildung des Magnetpakets einfach und kostengünstig erfolgen kann. Dadurch dass das Magnetpaket als Ganzes in die Kavität eingesetzt und/oder gefügt wird, kann auf aufwendige Schablonen oder Hilfseinrichtungen zum positionsgenauen Einsetzen einzelner Magnete verzichtet werden.

Dadurch dass jeder der mehreren verklebbaren Magnete oder das Magnetpaket vollständig mit dem Klebeband umwickelt ist, kann insbesondere eine Gefahr von klebstofffreien Stellen zwischen dem jeweiligen Magneten beziehungsweise dem Magnetpaket und Innenseiten der jeweiligen Kavität verhindert werden. Dadurch kann eine sichere Fixierung in der Kavität gewährleistet werden. Ein ungewolltes Lösen des jeweiligen Magneten beziehungsweise des Magnetpakets aus der Kavität und dadurch hervorgerufene Störgeräusche oder Beschädigungen des Rotors können in vorteilhafter Weise vermieden werden. Außerdem kann der jeder der mehreren verklebbaren Magnete beziehungsweise das Magnetpaket durch die vollständige Umwicklung mit dem Klebeband sicher von der Umgebung elektrisch isoliert werden. Dadurch kann die Leistungsfähigkeit des jeweiligen Magneten beziehungsweise des Magnetpakets sichergestellt werden und Funktionsstörungen des Rotors vermieden werden.

Besonders bevorzugt ist, dass jeder der mehreren verklebbaren Magnete oder das Magnetpaket spannungsfrei oder weitestgehend spannungsfrei in die Kavität eingesetzt wird. Hierzu weist die Kavität bevorzugt Abmaße auf, die dem jeweiligen Magneten oder dem Magnetpaket weitestgehend entsprechen, insbesondere gleichen. Möglich ist insbesondere ein Fügen der verklebbaren Magnete bzw. des Magnetpakets in einer Übergangspassung oder Spielpassung in der Kavität.

In einem weiteren bevorzugten Verfahrensschritt wird das Blechpaket mit den in die jeweilige Kavität eingesetzten verklebbaren Magneten oder mit dem in die jeweilige Kavität eingesetzten Magnetpaket erhitzt. Vorzugsweise werden das Blechpaket und der jeweilige verklebbare Magnet beziehungsweise das Magnetpaket induktiv erhitzt. Dabei verflüssigt sich der mindestens eine Klebstoff und dringt durch das Vliesmaterial, um die Verbindung zwischen jeweiligem Magnet / Magnetpaket und Blechpaket auszubilden.

Eine bevorzugte Ausgestaltung der Erfindung sieht vor, dass das Klebeband mindestens einen Klebstoff in Form eines Reaktionsharzes, wie beispielsweise ein Phenolharz und/oder ein Epoxidharz, umfasst. Insbesondere umfasst das Klebeband mindestens zwei Klebstoffe in Kombination. Besonders bevorzugt ist, dass eine erste Seite des Klebebandes, die insbesondere zu dem/den Magneten gerichtet ist und/oder diesen/diese kontaktiert, beschichtet ist. Der mindestens eine Klebstoff verflüssigt sich zumindest teilweise während des induktiven Erhitzens, insbesondere schmilzt er auf. Dadurch wird der Magnet bzw. das Magnetpaket in der Kavität mit dem Blechpaket insbesondere in einer Kavität, verklebt.

Um einen definierten Anpressdruck der verklebbaren Magnete oder Magnetpakete zum Blechpaket zu erzeugen, wird der Rotor während des Verklebens bevorzugt in Rotation versetzt. Die Wahl der Rotationsgeschwindigkeit wirkt sich dabei unmittelbar auf die Höhe des Anpressdrucks aus, d.h. je höher die Rotationsgeschwindigkeit, desto höher der Anpressdruck. Dies verbessert die Ausbildung einer homogenen und gleichmäßigen Verklebung signifikant.

Ein weiterer Verfahrensschritt beinhaltet die Abkühlung des Blechpakets, das zuvor gemeinsam mit den, in der gegebenenfalls vorhandenen entsprechenden Kavität angeordneten verklebbaren Magneten oder Magnetpaket erhitzt wurde. Dadurch dass und/oder während das Blechpaket abgekühlt wird, wird die durch den mindestens einen Klebstoff erzeugte Klebeverbindung zwischen dem jeweiligen Magneten oder dem Magnetpaket und dem Blechpaket ausgehärtet, sodass dieser/dieses an dem Blechpaket, insbesondere in einer Kavität des Blechpakets, sicher befestigt ist.

An dieser Stelle ist zu erwähnen, dass als "Magnet" im Sinne der vorliegenden Erfindung ein bereits magnetisiertes Bauteil aus einem Magnetmaterial mit magnetischen Eigenschaften zum Einsatz kommen kann. Alternativ kann aber auch ein Magnet in Form eines Bauteils verklebt werden, der aus einem noch nicht magnetisierten Magnetmaterial gebildet ist. Eine Magnetisierung des Magnetmaterials, bei der magnetische Eigenschaften ausgebildet werden, erfolgt dann erst nach einem Verkleben mit dem Blechpaket. Demnach kann der mindestens eine Magnet oder das mindestens eine Magnetpaket erst nach dem Verkleben mit dem Blechpaket magnetisiert werden und magnetische Eigenschaften erlangen.

Nach Abkühlung des Blechpakets und den gefügten Magneten oder des Magnetpakets ist der Rotor fertiggestellt. Dieser kann in einen Elektromotor zum Antrieb des Fahrzeugs integriert werden.

Einen weiteren Gegenstand der Erfindung bildet ein Rotor mit mehreren Magneten, wobei die Magnete gemäß dem erfindungsgemäßen Verfahren an dem Blechpaket zur Bildung des Rotors befestigt sind.

Ein Elektromotor für ein Fahrzeug, z.B. für einen Pkw, insbesondere für ein Elektromobil, mit dem erfindungsgemäßen Rotor bildet einen weiteren Gegenstand der Erfindung. Optional umfasst der Elektromotor den Stator, der bei Anlegen eines elektrischen Stroms Magnetfelder erzeugt, die die Rotation des Rotors verursachen.

In einer bevorzugten Ausgestaltung der Erfindung ist der Elektromotor zum Antrieb des Fahrzeugs in dieses integrierbar. Insbesondere ist der Elektromotor zur Erzeugung eines Traktionsmoments oder zumindest eines Teils des Traktionsmoments für Räder des Fahrzeugs ausgebildet. Im Speziellen ist der Elektromotor mit den Rädern mechanisch koppelbar, zum Beispiel über ein Untersetzungsgetriebe und Antriebswellen oder auch über ein Schaltgetriebe. Alternativ ist der Elektromotor im jeweiligen Rad integrierbar und kann somit als ein Radnabenmotor ausgebildet sein.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine perspektivische Seitenansicht eines Rotors mit zahlreichen Magnetpaketen und eine Draufsicht auf einen Ausschnitt einer Stirnseite des Rotors;
- Figur 2a: ein Verfahrensschritt eines Verfahrens zur Befestigung mindestens eines Magneten an dem Rotor aus Figur 1, wobei ein Magnet mit einem Klebeband umwickelt wird;
- Figur 2b: ein weiterer Verfahrensschritt des Verfahrens, wobei mehrere mit dem Klebeband umwickelte Magnete zu einem Magnetpaket aufeinander gestapelt werden;
- Figur 2c: ein zusätzlicher Verfahrensschritt, in dem das Magnetpaket in einer Kavität des Rotors gefügt wird;
- Figur 2d: ein weiterer Verfahrensschritt, bei dem der Rotor und das gefügte Magnetpaket erhitzt werden;
- Figur 2e: ein zusätzlicher Verfahrensschritt, in dem eine Abkühlung des Rotors mit dem gefügten Magnetpaket erfolgt;
- Figur 2f: den fertiggestellten Rotor, der in einem Elektromotor integrierbar ist.
Einander entsprechende oder gleiche Teile sind in den Figuren jeweils mit den gleichen Bezugszeichen versehen.

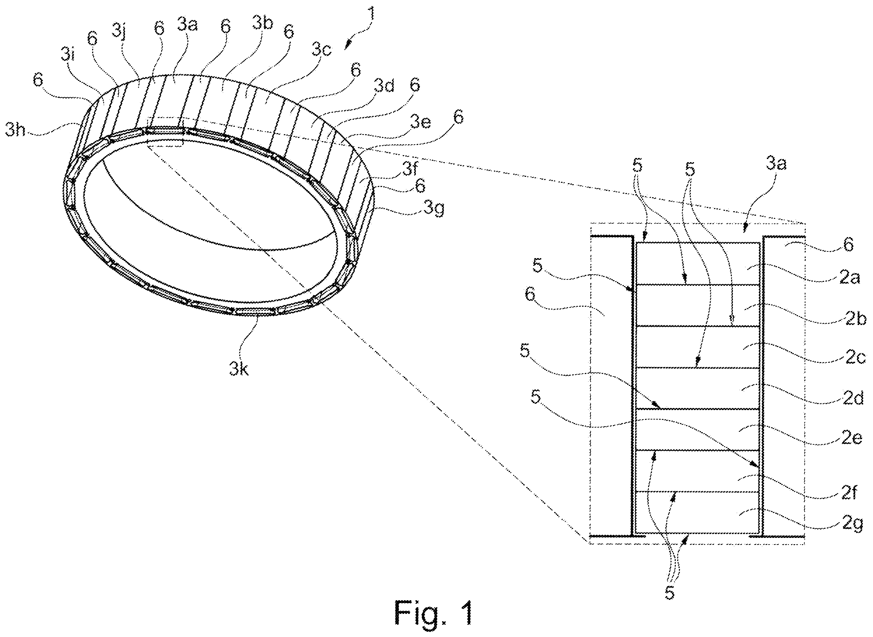

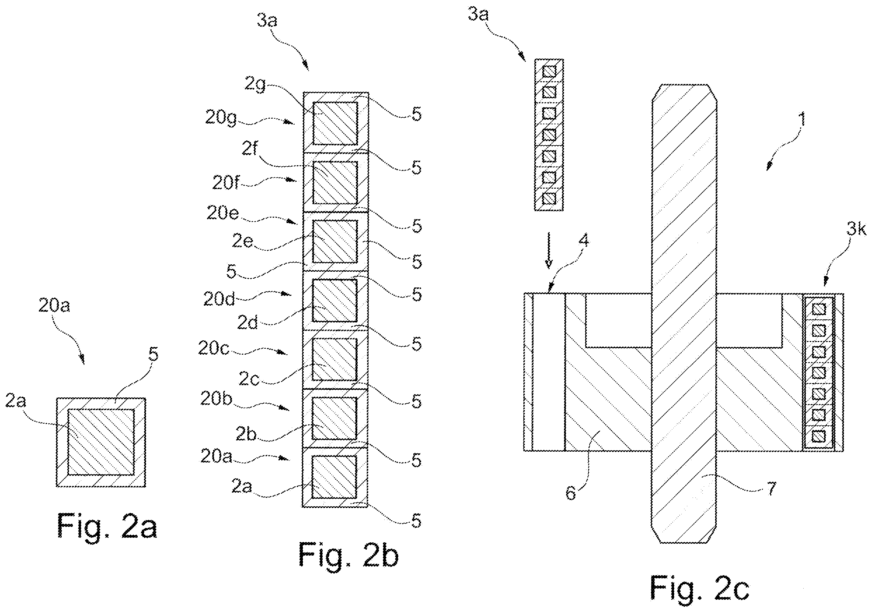

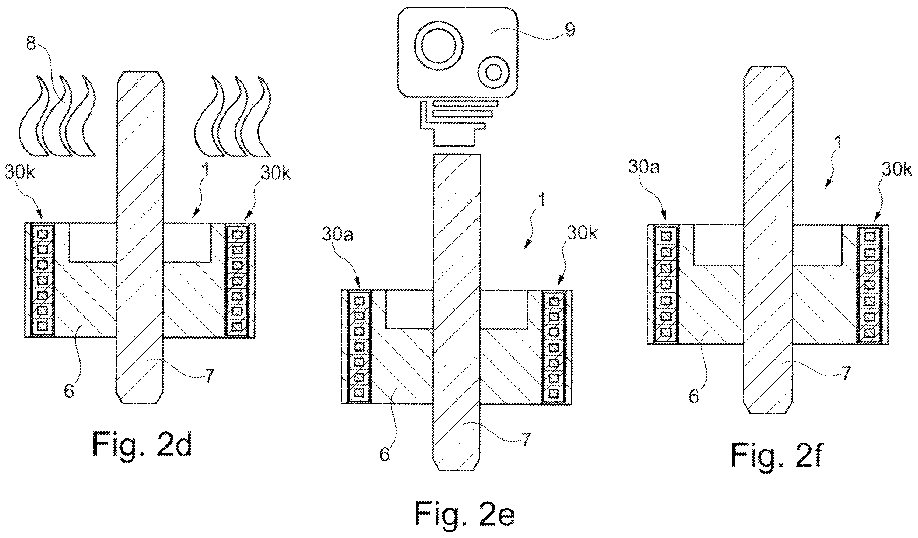

Figur 1 zeigt eine perspektivische Seitenansicht eines Rotors 1 mit mehreren Magnetpaketen 3a, 3b, 3c, 3d, 3e, 3f, 3g, 3h, 3i, 3j, 3k. Figur 1 zeigt weiterhin einen vergrößerten Ausschnitt einer Stirnseite des Rotors 1, von der aus ein erstes Magnetpaket 3a in einer entsprechenden Kavität 4 (Fig. 2) in dem Rotor 1 integriert ist.

Der Rotor 1 umfasst ein Blechpaket 6, das aus zahlreichen Elektroblechteilen gebildet ist. Er ist zur Integration in einem Elektromotor ausgebildet. Der Elektromotor ist zur Integration in ein E-Mobil, insbesondere in einen elektrisch angetriebenen Pkw, ausgebildet. Dort ist er dazu vorgesehen, Traktionsmomente zum Antrieb der Räder des Fahrzeugs zu erzeugen.

In dem Blechpaket 6 des Rotors 1 sind zahlreiche Kavitäten 4 eingebracht. Diese sind z.B. in das Blechpaket 6 eingestanzt. In jeder Kavität 4 ist ein Magnetpaket 3a, 3b, 3c, 3d, 3e, 3f, 3g, 3h, 3i, 3j, 3k spannungsfrei oder weitestgehend spannungsfrei eingebracht und/oder gefügt und verklebt.

Jedes Magnetpaket 3a, 3b, 3c, 3d, 3e, 3f, 3g, 3h, 3i, 3j, 3k umfasst mehrere, z.B. sieben Magnete 2a, 2b, 2c, 2d, 2e, 2f, 2g. Bei den Magneten handelt es sich um Dauermagnete. Jeder der Magnete 2a, 2b, 2c, 2d, 2e, 2f, 2g ist mit einem Klebeband 5 vollständig umgeben, sodass dadurch verklebbare Magnete 20a, 20b, 20c, 20d, 20e, 20f, 20g gebildet sind. Jedes Magnetpaket 3a, 3b, 3c, 3d, 3e, 3f, 3g, 3h, 3i, 3j, 3k ist durch Aneinanderreihen und/oder Aufeinanderstapeln der verklebbaren Magnete 20a, 20b, 20c, 20d, 20e, 20f, 20g gebildet. Somit umgibt das Klebeband 5 vollständig die Außenseiten des jeweiligen Magnetpakets 3a, 3b, 3c, 3d, 3e, 3f, 3g, 3h, 3i, 3j, 3k, wodurch dieses verklebbar ist. Zwischen den einzelnen verklebbaren Magneten 20a, 20b, 20c, 20d, 20e, 20f, 20g ist zumindest eine Lage des Klebebands 5 unterbrechungsfrei angeordnet.

Das Klebeband 5 umfasst ein Trägerband aus Vliesmaterial, das mit mindestens einem Klebstoff, bevorzugt mit zwei unterschiedlichen Klebstoffen beschichtet ist. So sind hier auf einer Seite des Trägermaterials Phenolharz und Epoxidharz aufgebracht. Die Seite, auf der der mindestens eine Klebstoff aufgebracht ist, ist zu dem jeweiligen Magnet 2a, 2b, 2c, 2d, 2e, 2f, 2g gerichtet und kontaktiert diesen. Die unbeschichtete Seite des Trägerbands bildet die Außenseite des jeweiligen verklebbaren Magneten 20a, 20b, 20c, 20d, 20e, 20f, 20g.

Die Figuren 2a - 2f zeigen eine Darstellung einzelner Verfahrensschritte eines Verfahrens, mit dem die Magnete 2a, 2b, 2c, 2d, 2e, 2f, 2g zu einem ersten Magnetpaket 3a zusammengefasst werden. Weiterhin ist die Befestigung des ersten Magnetpakets 3a an dem Blechpaket 6 in entsprechenden Verfahrensschritten des Verfahrens dargestellt.

In Figur 2a ist ein erster verklebbarer Magnet 20a gezeigt. Der erste verklebbare Magnet 20a ist aus einem ersten Magneten 2a und dem Klebeband 5 gebildet. Dieses wird zur Bildung des verklebbaren Magneten 20a um den ersten Magneten 2a gewickelt, sodass das Klebeband 5 den Magneten 2a vollständig und unterbrechungsfrei umgibt.

Figur 2b zeigt das erste Magnetpaket 3a. Das erste verklebbare Magnetpaket 3a wird dadurch gebildet, dass jeder der Magnete 2a, 2b, 2c, 2d, 2e, 2f, 2g jeweils mit dem Klebeband 5 umwickelt wird und die verklebbaren Magnete 20a, 20b, 20c, 20d, 20e, 20f, 20g anschließend aneinandergereiht oder aufeinandergestapelt werden. Alle weiteren verklebbaren Magnetpakete 3b, 3c, 3d, 3e, 3f, 3g, 3h, 3i, 3j, 3k werden auf dieselbe Art und Weise gebildet.

Somit können in vorteilhafter Weise mehrere verklebbare Magnete 20a, 20b, 20c, 20d, 20e, 20f, 20g, insbesondere eine unbegrenzte Anzahl an Magneten, einfach und Fertigungszeit sparend zu den Magnetpaketen 3a, 3b, 3c, 3d, 3e, 3f, 3g, 3h, 3i, 3j, 3k zusammengefasst werden, die anschließend als Einheiten in die entsprechenden Kavitäten 4 des Blechpakets 6 des Rotors 1 gefügt und darin verklebt werden können. Außerdem kann auf den Einsatz von Hilfswerkzeugen und Schablonen zum Fügen der einzelnen verklebbaren Magnete 20a, 20b, 20c, 20d, 20e, 20f, 20g in den Kavitäten 4 verzichtet werden. Weiterhin ist es von Vorteil, dass im Gegensatz zur Verwendung von Flüssigklebstoff, so wie es aus dem Stand der Technik bekannt ist, keine ausgeprägte Dosiertechnik, Prozessüberwachung und Prozessentwicklung notwendig ist, da die vollständige Umwicklung der einzelnen Magnete 20a, 20b, 20c, 20d, 20e, 20f, 20g mit dem Klebeband 5 eine vollflächige Verklebung mit Innenseiten der Kavität 4 gewährleistet und dadurch die Gefahr von unverklebten Stellen verhindert ist. Insbesondere können dadurch Fertigungszeit und Kosten eingespart werden. Ein weiterer Vorteil des Einsatzes des Klebebands 5 ist, dass dieses geringere Kosten als üblicherweise eingesetzter Flüssigklebstoff aufweist.

In Figur 2c ist ein Schnitt durch das Blechpaket 6 des Rotors 1 entlang einer Rotationsachse 7 gezeigt, um die der spätere Rotor 1 rotierbar ist. Es sind zwei Kavitäten 4 gezeigt, wobei in einer der beiden Kavitäten 4 bereits ein weiteres Magnetpaket 3k gefügt ist. Das erste Magnetpaket 3a wird in die noch freie Kavität 4 eingesetzt. Es wird so, wie auch alle übrigen Magnetpakete 3b, 3c, 3d, 3e, 3f, 3g, 3h, 3i, 3j, 3k in die Kavität 4 gefügt, dass eine Übergangspassung gebildet ist. Schwankungen im Spaltmaß zwischen dem Blechpaket 6 und den Magnetpaketen 3b, 3c, 3d, 3e, 3f, 3g, 3h, 3i, 3j, 3k können durch ein flexibles Klebeband 5 und dessen gezieltes Anbringen ausgeglichen werden. Somit können Spannungen zwischen dem Blechpaket 6 des Rotors 1 und dem jeweiligen Magnetpaket 3a, 3b, 3c, 3d, 3e, 3f, 3g, 3h, 3i, 3j, 3k weitestgehend vermieden werden. Insbesondere kann eine durch Druckspannungen bei einem Einpressen der Magnete 2a, 2b, 2c, 2d, 2e, 2f, 2g in die Kavitäten 4 hervorgerufene Gefahr der Beschädigung, der Veränderung technischer Eigenschaften und damit verbundener Leistungsverluste der Magnete 2a, 2b, 2c, 2d, 2e, 2f, 2g in vorteilhafter Weise vermieden werden.

Gemäß Figur 2d sind das erste Magnetpaket 3a, das weitere Magnetpaket 3k und alle übrigen Magnetpakete 3b, 3c, 3d, 3e, 3f, 3g, 3h, 3i, 3j (Fig. 1) in den entsprechenden Kavitäten 4 des Blechpakets 6 gefügt. Das Blechpaket 6 wird nun mit den gefügten Magnetpaketen 3a, 3b, 3c, 3d, 3e, 3f, 3g, 3h, 3i, 3j, 3k durch Zuführung von induktiver Wärme 8 erhitzt. Durch die Wärme 8 verflüssigt sich der mindestens eine Klebstoff auf dem Klebeband 5 zumindest teilweise und/oder schmilzt auf. Dadurch werden die verklebbaren Magnete 20a, 20b, 20c, 20d, 20e, 20f, 20g des jeweiligen Magnetpakets 3a, 3b, 3c, 3d, 3e, 3f, 3g, 3h, 3i, 3j, 3k untereinander verklebt. Diese werden wiederum mit den Seitenwänden des Blechpakets 6 in der entsprechenden Kavität 4 verklebt, sodass sich durch eine sichere Klebeverbindung befestigt sind. Insbesondere ist durch das einfach und leicht anzubringende Klebeband 5 gewährleistet, dass die Magnete 2a, 2b, 2c, 2d, 2e, 2f, 2g nach dem induktiven Erwärmen vollständig mit Klebstoff umgeben sind. Dadurch kann vermieden werden, dass es zu einem ungewollten Lösen des nun verklebten Magneten 21a, 21b, 21c, 21d, 21e, 21f, 21g oder Magnetpakets 30a, 30b, 30c, 30d, 30e, 30f, 30g, 30h, 30i, 30j, 30k in der entsprechenden Kavität 4 verbunden mit Störgeräuschen und/oder Beschädigungen des fertiggestellten Rotors 1 kommt.

Der mindestens eine Klebstoff des Klebebands 5, insbesondere die beiden unterschiedlichen Klebstoffe, isolieren die entsprechenden verklebten Magnetpakete 30a, 30b, 30c, 30d, 30e, 30f, 30g, 30h, 30i, 30j, 30k elektrisch gegenüber dem Blechpaket 6, sodass eine Funktions- und Leistungsfähigkeit des späteren Rotors 1 in dem Elektromotor uneingeschränkt gewährleistet werden kann. Weiterhin wird durch die elektrische Isolationswirkung des mindestens einen Klebstoffs in vorteilhafter Weise erreicht, dass die verklebten Magnetpakete 30a, 30b, 30c, 30d, 30e, 30f, 30g, 30h, 30i, 30j, 30k vor Umgebungsmedien, wie z.B. Salzwasser und/oder Getriebeöl, geschützt sind.

Figur 2e zeigt einen weiteren Verfahrensschritt, in dem das Blechpaket 6 durch eine Kühlvorrichtung 9 abgekühlt wird. Durch die Abkühlung wird die Klebeverbindung zwischen den einzelnen verklebten Magneten 21a, 21b, 21c, 21d, 21e, 21f, 21g, den verklebten Magnetpaketen 30a, 30b, 30c, 30d, 30e, 30f, 30g, 30h, 30i, 30j, 30k und den Seitenwänden des Blechpakets 6 in der jeweiligen Kavität 4 ausgehärtet.

Sofern die Magnete 2a-g oder Magnetpakete 3a-k aus einem Magnetmaterial gebildet sind, das noch keine magnetischen Eigenschaften aufweist, schließt sich an den Abkühlvorgang bevorzugt eine Magnetisierung der Magnete 2a-g oder Magnetpakete 3a-k an, welcher diesen die erforderlichen magnetischen Eigenschaften verleiht.

Figur 2f zeigt den, aus dem Blechpaket 6 und den Magnetpaketen 30a, 30b, 30c, 30d, 30e, 30f, 30g, 30h, 30i, 30j, 30k fertiggestellten Rotor 1, so wie er in einen Elektromotor integrierbar ist. Der Rotor 1 bildet in dem Elektromotor ein rotierendes, magnetisch wirkendes Element, das mit einem Stator des Elektromotors in einer magnetischen Wirkverbindung steht. Der Stator ist aus einem Elektroblechpaket gebildet, das mit Kupferdrahtspulen umwickelt ist. Bei einer Versorgung des Stators mit elektrischer Energie, z.B. aus einer Traktionsbatterie des Fahrzeugs, rotiert der Rotor aufgrund des Stromflusses durch die Kupferdrahtspulen und der dadurch erzeugten Magnetfelder. Das Drehmoment des Rotors wird über ein Getriebe des Fahrzeugs umgesetzt und auf eine Antriebsachse des Fahrzeugs übertragen, sodass die Räder des Fahrzeugs angetrieben werden.

### Bezugszeichenliste

- 1: Rotor
- 2a-g: Magnet
- 3a-k: Magnetpaket
- 4: Kavität
- 5: Klebeband
- 6: Blechpaket
- 7: Rotationsachse
- 8: induktive Wärmezufuhr
- 9: Kühleinheit
- 20a-g: verklebbarer Magnet
- 21a-g: verklebter Magnet
- 30a-k: verklebtes Magnetpaket

## Patentansprüche

1. Verfahren zum Befestigen mehrerer Magnete (2a, 2b, 2c, 2d, 2e, 2f, 2g) an einem Blechpaket (6) eines Rotors (1) für einen Elektromotor, wobei jeder der mehreren Magnete (2a, 2b, 2c, 2d, 2e, 2f, 2g) mit einem Klebeband (5) umwickelt wird, sodass mehrere verklebbare Magnete (20a, 20b, 20c, 20d, 20e, 20f, 20g) gebildet werden, wobei das Klebeband (5) ein Trägerband und mindestens einen Klebstoff umfasst, wobei das Trägerband durch ein offen-poröses Vliesmaterial gebildet ist, das bei Raumtemperatur lediglich einseitig mit dem mindestens einen Klebstoff beschichtet ist, wobei diese klebrige Seite des Klebebands dem Magneten zugewandt ist, und wobei der mindestens eine Klebstoff bei einer Temperaturerhöhung um mindestens 20°C gegenüber der Raumtemperatur das offen-poröse Vliesmaterial durchdringt und sich mit dem Blechpaket (6) des Rotors (1) verbindet, wobei das Blechpaket (6) mindestens eine Kavität (4) für die mehreren verklebbaren Magneten (20a, 20b, 20c, 20d, 20e, 20f, 20g) aufweist,
**dadurch gekennzeichnet, dass**
mehrere verklebbare Magnete (20a, 20b, 20c, 20d, 20e, 20f, 20g) aneinandergereiht und/oder aufeinander gestapelt werden, wobei zwischen jedem der Magnete (2a, 2b, 2c, 2d, 2e, 2f, 2g) und an den Außenseiten der Magnete (2a, 2b, 2c, 2d, 2e, 2f, 2g) zumindest eine Lage des Klebebands (5) angeordnet ist, sodass mindestens ein verklebbares Magnetpaket (3a, 3b, 3c, 3d, 3e, 3f, 3g, 3h, 3i, 3j, 3k) gebildet wird, wobei das mindestens eine verklebbare Magnetpaket (3a, 3b, 3c, 3d, 3e, 3f, 3g, 3h, 3i, 3j, 3k) in die mindestens eine Kavität (4) eingesetzt und/oder gefügt wird und dass das mindestens eine Magnetpaket (3a, 3b, 3c, 3d, 3e, 3f, 3g, 3h, 3i, 3j, 3k) erst nach dem Verkleben mit dem Blechpaket (6) magnetisiert wird und magnetische Eigenschaften erlangt.

2. Verfahren nach Anspruch 1, **dadurch gekennzeichnet, dass** das mindestens eine verklebbare Magnetpaket (3a, 3b, 3c, 3d, 3e, 3f, 3g, 3h, 3i, 3j, 3k) spannungsfrei oder weitestgehend spannungsfrei in die mindestens eine Kavität (4) eingesetzt und/oder gefügt wird.

3. Verfahren nach einem der vorhergehenden Ansprüche, **dadurch gekennzeichnet, dass** das Blechpaket (6) mit dem in die mindestens eine Kavität (4) eingesetzten verklebbaren Magnetpaket (3a, 3b, 3c, 3d, 3e, 3f, 3g, 3h, 3i, 3j, 3k) induktiv erhitzt wird.

4. Verfahren nach Anspruch 3, **dadurch gekennzeichnet, dass** der mindestens eine Klebstoff sich während des induktiven Erhitzens zumindest teilweise verflüssigt und/oder aufschmilzt, sodass das mindestens eine verklebbare Magnetpaket (3a, 3b, 3c, 3d, 3e, 3f, 3g, 3h, 3i, 3j, 3k) in der mindestens einen Kavität (4) mit dem Blechpaket (6) verklebt wird.

5. Verfahren nach Anspruch 4, **dadurch gekennzeichnet, dass** das Blechpaket (6) mit dem mindestens einen verklebten Magnetpaket (30a, 30b, 30c, 30d, 30e, 30f, 30g, 30h, 30i, 30j, 30k) abgekühlt wird, sodass eine durch den mindestens einen Klebstoff erzeugte Verbindung zwischen dem mindestens einen verklebten Magnetpaket (30a, 30b, 30c, 30d, 30e, 30f, 30g, 30h, 30i, 30j, 30k) und dem Blechpaket (6) ausgehärtet wird.

6. Verfahren nach einem der Ansprüche 1 bis 5, **dadurch gekennzeichnet, dass** der mindestens eine Klebstoff ein Reaktionsharz, insbesondere ein Epoxidharz, umfasst.

7. Rotor (1) mit dem mindestens einen verklebten Magnetpaket (30a, 30b, 30c, 30d, 30e, 30f, 30g, 30h, 30i, 30j, 30k) und mit dem Blechpaket (6), wobei das mindestens eine Magnetpaket (30a, 30b, 30c, 30d, 30e, 30f, 30g, 30h, 30i, 30j, 30k) gemäß dem Verfahren nach einem der Ansprüche 1 bis 6 an dem Blechpaket (6) befestigt und magnetisiert worden ist.

8. Elektromotor für ein Fahrzeug mit dem Rotor (1) nach Anspruch 7.

## Claims

1. A method of fastening multiple magnets (2a, 2b, 2c, 2d, 2e, 2f, 2g) to a laminated core (6) of a rotor (1) for an electric motor, wherein each of the multiple magnets (2a, 2b, 2c, 2d, 2e, 2f, 2g) is wrapped with an adhesive tape (5), so that multiple bondable magnets (20a, 20b, 20c, 20d, 20e, 20f, 20g) are formed, wherein the adhesive tape (5) comprises a carrier tape and at least one adhesive, wherein the carrier tape is formed by an open-porous non-woven material, which is coated on only one side with the at least one adhesive at room temperature, wherein this adhesive side of the adhesive tape faces the magnet, and wherein the at least one adhesive penetrates the open-porous non-woven material at a temperature increase of at least 20°C compared to room temperature and bonds with the laminated core (6) of the rotor (1), wherein the laminated core (6) has at least one cavity (4) for the multiple bondable magnets (20a, 20b, 20c, 20d, 20e, 20f, 20g),
**characterised in that**
multiple bondable magnets (20a, 20b, 20c, 20d, 20e, 20f, 20g) are arranged in a row and/or stacked on top of one another, wherein at least one layer of the adhesive tape (5) is arranged between each of the magnets (2a, 2b, 2c, 2d, 2e, 2f, 2g) and on the outer sides of the magnets (2a, 2b, 2c, 2d, 2e, 2f, 2g), so that at least one bondable magnet pack (3a, 3b, 3c, 3d, 3e, 3f, 3g, 3h, 3i, 3j, 3k) is formed, wherein the at least one bondable magnet pack (3a, 3b, 3c, 3d, 3e, 3f, 3g, 3h, 3i, 3j, 3k) is inserted into and/or joined to the at least one cavity (4) and that the at least one magnet pack (3a, 3b, 3c, 3d, 3e, 3f, 3g, 3h, 3i, 3j, 3k) is magnetised and acquires magnetic properties only after it has been bonded laminated core (6).

2. The method according to claim 1, **characterised in that** the at least one bondable magnet pack (3a, 3b, 3c, 3d, 3e, 3f, 3g, 3h, 3i, 3j, 3k) is inserted into and/or joined to the at least one cavity (4) tension-free or largely tension-free.

3. The method according to one of the preceding claims, **characterised in that** the laminated core (6) is inductively heated with the bondable magnet pack (3a, 3b, 3c, 3d, 3e, 3f, 3g, 3h, 3i, 3j, 3k) inserted into the at least one cavity (4).

4. The method according to claim 3, **characterised in that** the at least one adhesive at least partially liquefies and/or melts during the inductive heating, so that the at least one bondable magnet pack (3a, 3b, 3c, 3d, 3e, 3f, 3g, 3h, 3i, 3j, 3k) is bonded to the laminated core (6) in the at least one cavity (4).

5. The method according to claim 4, **characterised in that** the laminated core (6) with the at least one bonded magnetic pack (30a, 30b, 30c, 30d, 30e, 30f, 30g, 30h, 30i, 30j, 30k) is cooled, so that a bond produced by the at least one adhesive between the at least one bonded magnetic pack (30a, 30b, 30c, 30d, 30e, 30f, 30g, 30h, 30i, 30j, 30k) and the laminated core (6) is cured.

6. The method according to one of claims 1 to 5, **characterised in that** the at least one adhesive comprises a reactive resin, in particular an epoxy resin.

7. A rotor (1) with the at least one bonded magnet pack (30a, 30b, 30c, 30d, 30e, 30f, 30g, 30h, 30i, 30j, 30k) and with the laminated core (6), wherein the at least one magnet pack (30a, 30b, 30c, 30d, 30e, 30f, 30g, 30h, 30i, 30j, 30k) has been fastened to the laminated core (6) and magnetised in accordance with the method according to one of claims 1 to 6.

8. An electric motor for a vehicle having the rotor (1) according to claim 7.

## Revendications

1. Procédé de fixation de plusieurs aimants (2a, 2b, 2c, 2d, 2e, 2f, 2g) sur un empilement de tôles (6) d'un rotor (1) pour un moteur électrique, dans lequel chacun des plusieurs aimants (2a, 2b, 2c, 2d, 2e, 2f, 2g) est enroulé d'un ruban adhésif (5) de sorte que plusieurs aimants (20a, 20b, 20c, 20d, 20e, 20f, 20g) pouvant être collés sont formés, dans lequel le ruban adhésif (5) comprend une bande support et au moins un adhésif, dans lequel la bande support est formée par un matériau non tissé à pores ouverts, lequel, à température ambiante, est revêtu sur une seule face de l'au moins un adhésif, dans lequel ladite face collante du ruban adhésif est tournée vers l'aimant, et dans lequel l'au moins un adhésif traverse le matériau non tissé à pores ouverts lors d'une augmentation de température d'au moins 20 °C par rapport à la température ambiante et se lie à l'empilement de tôles (6) du rotor (1), dans lequel l'empilement de tôles (6) comporte au moins une cavité (4) pour les plusieurs aimants (20a, 20b, 20c, 20d, 20e, 20f, 20g) pouvant être collés,
**caractérisé en ce que**
plusieurs aimants (20a, 20b, 20c, 20d, 20e, 20f, 20g) pouvant être collés sont alignés et/ou empilés les uns sur les autres, dans lequel entre chacun des aimants (2a, 2b, 2c, 2d, 2e, 2f, 2g) et sur les faces extérieures des aimants (2a, 2b, 2c, 2d, 2e, 2f, 2g) est agencée au moins une couche du ruban adhésif (5) de sorte qu'au moins un empilement d'aimants (3a, 3b, 3c, 3d, 3e, 3f, 3g, 3h, 3i, 3j, 3k) pouvant être collé est formé, dans lequel l'au moins un empilement d'aimants (3a, 3b, 3c, 3d, 3e, 3f, 3g, 3h, 3i, 3j, 3k) pouvant être collé est inséré et/ou assemblé dans l'au moins une cavité (4) et que l'au moins un empilement d'aimants (3a, 3b, 3c, 3d, 3e, 3f, 3g, 3h, 3i, 3j, 3k) n'est magnétisé et n'acquiert des propriétés magnétiques qu'après le collage à l'empilement de tôles (6).

2. Procédé selon la revendication 1, **caractérisé en ce que** l'au moins un empilement d'aimants (3a, 3b, 3c, 3d, 3e, 3f, 3g, 3h, 3i, 3j, 3k) pouvant être collé est inséré et/ou assemblé sans tension ou pratiquement sans tension dans l'au moins une cavité (4).

3. Procédé selon l'une quelconque des revendications précédentes, **caractérisé en ce que** l'empilement de tôles (6) est chauffé par induction avec l'empilement d'aimants (3a, 3b, 3c, 3d, 3e, 3f, 3g, 3h, 3i, 3j, 3k) pouvant être collé inséré dans l'au moins une cavité (4).

4. Procédé selon la revendication 3, **caractérisé en ce que** l'au moins un adhésif se liquéfie et/ou fond au moins partiellement lors du chauffage par induction de sorte que l'au moins un empilement d'aimants (3a, 3b, 3c, 3d, 3e, 3f, 3g, 3h, 3i, 3j, 3k) pouvant être collé est collé dans l'au moins une cavité (4) à l'empilement de tôles (6).

5. Procédé selon la revendication 4, **caractérisé en ce que** le paquet de tôles (6) avec l'au moins un empilement d'aimants (30a, 30b, 30c, 30d, 30e, 30f, 30g, 30h, 30i, 30j, 30k) collé est refroidi de sorte qu'une liaison générée par l'au moins un adhésif entre l'au moins un empilement d'aimants (30a, 30b, 30c, 30d, 30e, 30f, 30g, 30h, 30i, 30j, 30k) collé et l'empilement de tôles (6) est durcie.

6. Procédé selon l'une quelconque des revendications 1 à 5, **caractérisé en ce que** l'au moins un adhésif comprend une résine réactive, en particulier une résine époxy.

7. Rotor (1) comportant au moins un empilement d'aimants (30a, 30b, 30c, 30d, 30e, 30f, 30g, 30h, 30i, 30j, 30k) collé et comportant un empilement de tôles (6), dans lequel l'au moins un empilement d'aimants (30a, 30b, 30c, 30d, 30e, 30f, 30g, 30h, 30i, 30j, 30k) a été fixé et magnétisé sur l'empilement de tôles (6) selon le procédé selon l'une quelconque des revendications 1 à 6.

8. Moteur électrique pour un véhicule comportant le rotor (1) selon la revendication 7.
